# EUROPÄISCHE PATENTSCHRIFT

(11) **EP 2 720 850 B1**
(45) Veröffentlichungstag und Bekanntmachung des Hinweises auf die Patenterteilung: **27.05.2015**
(21) Anmeldenummer: 12731324.5
(22) Anmeldetag: 05.06.2012
(51) Int. Cl.: B29C 65/02, B29C 53/38

(54) **VERFAHREN ZUM HERSTELLEN VON ROHRKÖRPERN FÜR VERPACKUNGSTUBEN SOWIE VERPACKUNGSTUBE MIT ROHRKÖRPER**
METHOD FOR PRODUCING TUBULAR BODIES FOR PACKAGING TUBES, AND A PACKAGING TUBE WITH A TUBULAR BODY
PROCÉDÉ DE FABRICATION DE CORPS TUBULAIRES POUR TUBES D'EMBALLAGE ET TUBE D'EMBALLAGE COMPORTANT UN CORPS TUBULAIRE

(30) Priorität: 16.06.2011 DE 102011051108
(43) Veröffentlichungstag der Anmeldung: 23.04.2014
(73) Patentinhaber: PackSys Global (Switzerland) Ltd., 8630 Rüti (CH)
(72) Erfinder: LÄUBLI, Julius, CH-8645 Jona (CH)
(74) Vertreter: Wagner, Kilian
(86) Internationale Anmeldenummer: PCT/EP2012/060572
(87) Internationale Veröffentlichungsnummer: WO 2012/171829

(56) Entgegenhaltungen:
- JP-A- 8 001 838
- JP-A- 2005 239 199

## Beschreibung

Die Erfindung betrifft ein Verfahren zum Herstellen von eine Innenumfangsfläche sowie eine Außenumfangsfläche aufweisenden Rohrkörpern für Verpackungstuben aus einem bandförmigen, eine Barriereschicht umfassenden Foliensubstrat gemäß Anspruch 1 sowie eine Verpackungstube, umfassend einen, vorzugsweise nach einem erfindungsgemäßen Verfahren hergestellten Rohrkörper sowie einen fest mit dem Rohrkörper verbundenen Tubenkopf gemäß dem Oberbegriff des Anspruchs 10.

Aus der JP 8 001 838 A ist ein Verfahren zum Herstellen von eine Innenumfangsfläche sowie eine Außenumfangsfläche aufweisenden Rohrkörpern für Verpackungstuben aus einem bandförmigen, eine Barriereschicht umfassenden Foliensubstrat bekannt, wobei zwei Randseiten des Foliensubstrates beim Verschweißen so gegeneinander gepresst werden, dass die Barriereschicht bezogen auf eine gedachte Nulllinie ausgelenkt wird. Der bekannte Rohrkörper scheint hinsichtlich der Sicherheit und der Robustheit der Schweißverbindung verbesserungswürdig.

Die JP 2005 239 199 A zeigt ebenfalls einen Rohrkörper für Tuben, bei welchen die Barriereschicht aus dem Bereich einer Nulllinie endseitig ausgelenkt ist. Auch hier scheint die Verbindung der Randseiten verbesserungswürdig.

Aus der WO 2007/113781 A2 ist ein Rohrkörper für Verpackungstuben bekannt. Der Rohrkörper der bekannten Verpackungstube wird hergestellt, indem zwei im rechten Winkel zur Außenumfangsfläche orientierte Randseiten bündig aneinander angelegt und dann auf der Außenumfangsfläche ein von dem den Rohrkörper bildenden Foliensubstrat separater Siegelstreifen vorgesehen wird, mit welchem das Foliensubstrat zu der vorerwähnten Rohrform fixiert (geschweißt) wird. Nachteilig bei der bekannten Verpackungstube ist, dass zum Verschweißen des Foliensubstrates bzw. zum Herstellen des Rohrkörpers ein zusätzliches Material in Form eines Siegelstreifens verwendet werden muss, der noch dazu optisch aufträgt. Alternativ zur Anordnung des Siegelstreifens auf der Außenumfangsfläche beschreibt die vorgenannte Druckschrift das Vorsehen des Siegelstreifens auf der Innenseite mit der Gefahr einer Spaltbildung im eigentlichen Foliensubstrat. Zudem ist die Herstellung aufgrund der Verwendung eines separaten Siegelstreifens vergleichsweise aufwändig und materialintensiv.

Aus der CH 686 665 A5 ist ein Verfahren zum Herstellen eines Rohrkörpers für eine Verpackungstube bekannt, bei welcher nicht abgeschrägte Randseiten des Foliensubstrates aneinander angelegt und dann das Foliensubstrat miteinander verschweißt wird. Im Gegensatz zu dem vorerwähnten Stand der Technik kommt das beschriebene Verfahren ohne separaten Siegelstreifen aus. Nachteilig bei der bekannten Tube ist die vergleichsweise kleine Kontaktfläche (Schweißfläche).

Aus der DE 41 21 427 C2 ist ein alternatives Verfahren zum Herstellen eines Rohrkörpers bekannt. Dort ist in Fig. 8 ein Ausführungsbeispiel gezeigt, bei welchem die einander gegenüberliegenden, sich in Längsrichtung erstreckenden Randseiten eines bandförmigen Foliensubstrates nicht rechtwinklig zur Außenumfangsfläche verlaufen, sondern abgeschrägt ausgebildet sind, wobei die Randseiten derart aneinandergelegt werden, dass die Randseiten radial außen bündig abschließen, d.h. zwei benachbarte Außenumfangsflächenabschnitte gehen vor dem Schweißen in Umfangsrichtung stufenlos ineinander über bzw. liegen auf demselben Radius. In diesem Zustand werden die Randseiten dann durch gesandwichte Aufnahme zwischen zwei Schweißbändern miteinander verschweißt. Auf diese Weise hergestellte Rohrkörper haben sich bewährt. Insbesondere ist positiv hervorzuheben, dass das bekannte Verfahren ohne zusätzlichen Siegelstreifen auskommt. Auch sind die Kontaktflächen vergleichsweise groß. Es bestehen jedoch Bestrebungen die Verbindung, insbesondere die Schweißnaht zwischen den Randseiten weiter zu verbessern, insbesondere im Hinblick auf die Robustheit und im Hinblick auf eine noch geringere Durchlässigkeit für Feuchtigkeit und/oder Sauerstoff. Bevorzugt sollen Fehlverschweißungen in einem radial äußeren Bereich der aneinander anliegenden Randseiten, genauer in einem geradlinig nach außen führenden Grenzbereich zwischen den Randseiten vermieden werden, um somit ein unerwünschtes Aufplatzen oder selbsttätiges Öffnen einer Verpackungstube im Bereich der Schweißnaht sicher zu verhindern.

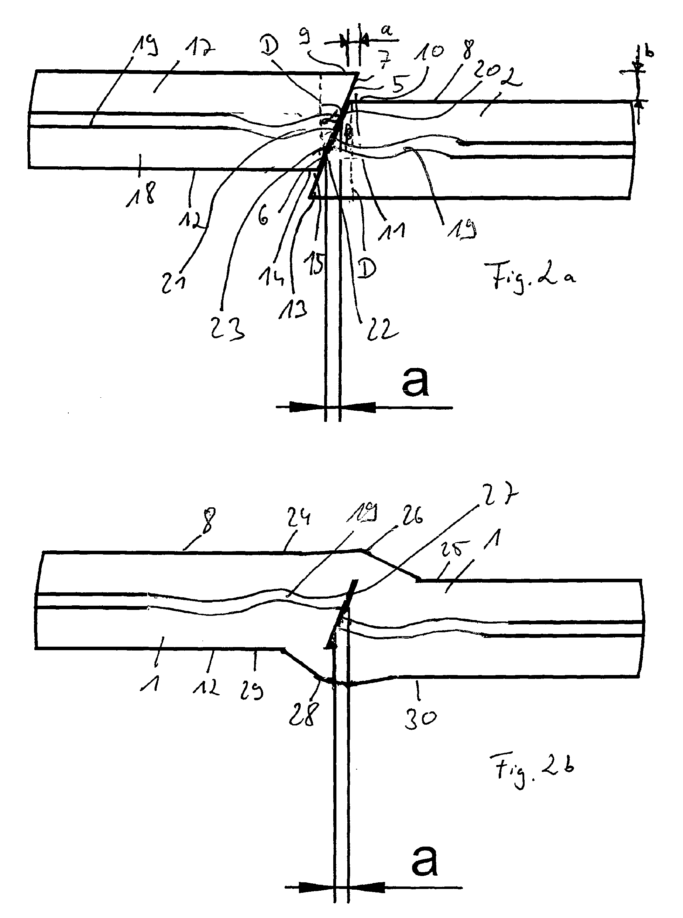

Aus der JP 8 091 397 A ist eine Verpackungstube mit einem Tubenrohr aus einem Laminatsubstrat bekannt, wobei sich in der Darstellung gemäß Fig. 2 eine leichte Auslenkung eines gefärbten Films in einem Kontaktbereich zweier miteinander verschweißter Randseiten erkennen lässt. Die mit dem Bezugszeichen 3 gekennzeichnete, metallische Barriereschicht überlappt sich berührungsfrei in Umfangsrichtung, wobei ein in der Zeichnungsebene linkes Ende nach oben und ein in der Zeichnungsebene rechtes Ende nach unten ausgelenkt ist.

Ausgehend von dem vorgenannten Stand der Technik liegt der Erfindung die Aufgabe zugrunde, ein verbessertes Verfahren zum Herstellen von Rohrkörpern für Verpackungstuben anzugeben, welches ohne zusätzliches Siegelband auskommt und zudem eine bessere (robustere bzw. sichere) Verbindung zwischen den Randseiten des Rohrkörpers sicherstellt, *wobei gleichzeitig optimale Barriereeigenschaften gegeben sein sollten.*

Ferner besteht die Aufgabe darin eine entsprechend verbesserte, insbesondere robustere Verpackungstube und gute Barriereeigenschaften anzugeben.

Diese Aufgabe wird hinsichtlich des Verfahrens mit den Merkmalen des Anspruchs 1 und hinsichtlich der Verpackungstube mit den Merkmalen des Anspruchs 10 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt der Gedanke zugrunde, die einander gegenüberliegenden abgeschrägten Randseiten derart gegeneinander zu pressen, insbesondere während des Erhärtens bzw. Erkaltens der Schweißnaht vorzugsweise bis zur Verfestigung nach dem Schweißprozess, dass die mindestens eine Barriereschicht, zumindest abschnittsweise derart gestaucht wird, dass sich eine (bleibende) Wellengeometrie bildet, die mehrere Wellentäler und/oder mehrere Wellenberge umfasst. Durch das Stauchen in Umfangsrichtung und der daraus resultierenden Wellengeometrie der Barriereschicht wird überraschend die Robustheit der Verpackungstube erhöht und es werden die Dichtigkeitseigenschaften in Bezug auf Gasdurchtritt und/oder Feuchtigkeitsdurchtritt, insbesondere im Verschweißungsbereich verbessert. Als Barriereschicht kann beispielsweise mindestens eine Metallfolie oder eine Metallisierung zum Einsatz kommen und/oder mindestens eine Barrierekunststoffschicht, wie beispielsweise EVOH, PA, PETG.

Als besonders vorteilhaft hat es sich herausgestellt, wenn die Randseiten, insbesondere während des Aushärtens bzw. Erkaltens der Schweißnaht mit einer Kraft pro Kontaktfläche aus einem Wertebereich zwischen 0,1 bar und 4 bar, vorzugsweise zwischen 0,2 bar und 1 bar in Umfangsrichtung gegeneinander gepresst werden, was beispielsweise durch entsprechende Leitbleche realisiert werden kann. Bevorzugt ist der Druck in Umfangsrichtung vor dem Aufschmelzen höher gewählt als die zuvor angegebenen Werte.

Die Wellengeometrie umfasst, wie eingangs erwähnt, bevorzugt mehrere Wellentäler und/oder mehrere Wellenberg, wobei auf ein Wellental in Umfangsrichtung ein Wellenberg folgt. wobei es besonders bevorzugt ist, wenn die Radialauslenkung der aneinander angrenzenden Wellenberge und Wellentäler in Umfangsrichtung mit zunehmendem Abstand zur Stauchungsstelle bzw. Verschweißungsstelle abnimmt (abnehmende Amplitude).

In Weiterbildung der Erfindung ist mit Vorteil vorgesehen in Abkehr der Lehre der DE 41 21 427 C2, die abgeschrägten Randseiten nicht derart bündig anzuordnen, dass die einander gegenüberliegenden Randseiten auf denselben Radius in Bezug auf eine Längsachse des Rohrkörpers enden, sondern derart, dass die erste der beiden Randseiten die Außenumfangsfläche des Rohrkörpers vor dem Schweißvorgang (ein Stück weit) in Umfangsrichtung überragt, derart, dass zwischen dieser etwas weiter nach radial außen versetzten ersten Randseite und der zur zweiten Randseite unmittelbar benachbarten Außenumfangsfläche des Rohrkörpers ein, vorzugsweise im Querschnitt im Wesentlichen dreieckiger, sich schräg nach außen öffnender Längsspalt gebildet wird. Anders ausgedrückt wird durch die in radialer Richtung orientierte, höhenversetzte (radial versetzte) Anordnung der beiden abgeschrägten Randseiten vom radial äußeren Bereich der ersten Randseite eine Art überstehender Zipfel gebildet, der sich oberhalb der Außenumfangsfläche des Rohrkörpers befindet, so dass eine langgestreckte Nut bzw. Aufnahme, d.h. Längsspalt gebildet wird. Dieser äußere Längsspalt wird bei dem auf den vorgenannten Positionierschritt folgenden Schweißschritt mit Kunststoffmaterial, insbesondere des vorerwähnten Zipfels gefüllt, so dass sich ein sanfter, d.h. nicht kantiger bzw. stufenloser Übergang ausbildet, der die Grenzfläche zwischen den aneinanderliegenden Randseiten in einem radial äußeren Bereich überdeckt und somit ein Ablösen der beiden Randseiten voneinander sicher verhindert. Darüber hinaus setzt sich die gedachte Grenzfläche zwischen den beiden abgeschrägten, aneinander anliegenden Randseiten nicht linear wie im Stand der Technik bis an den Außenumfang fort, sondern wird von dem Übergangsabschnitt verschlossen. Hieraus resultiert eine dichtere Verpackungstube, welche noch dazu robuster ist. Das verbesserte Verfahren kommt ohne zusätzliches Siegelband aus und ist daher materialsparend und überraschend einfach, da der später mit Kunststoffmaterial gefüllte Längsspalt vergleichsweise einfach durch nicht bündiges bzw. höhenversetztes Aneinanderanlegen der beiden abgeschrägten Randseiten erhalten werden kann.

Das Umformen des zunächst bandförmigen Foliensubstrates zu dem Rohrkörper bzw. der Rohrform erfolgt bevorzugt in an sich bekannter Weise beispielsweise über Formbänder, die über konkav konturierte Walzen angetrieben sind, wie dies beispielsweise in der CH 686 665 A5 dargestellt ist.

Das erfindungsgemäße Verfahren ermöglicht es auch asymmetrisch aufgebaute Foliensubstrate ohne die Verwendung von zusätzlichem Siegelmaterial zu einem Rohrkörper für Verpackungstuben zu verarbeiten.

Unter einer Wellengeometrie wird dabei eine periodische, d.h. durch in Umfangsrichtung in Form von mindestens zwei Wellenbergen und/oder mindestens zwei Wellentälern fortsetzende Geometrie verstanden, wobei benachbarte Wellenberge und Täler nicht notwendigerweise die gleiche Längen- bzw. Umfangserstreckung aufweisen müssen. Mit anderen Worten, kann die Wellenlänge in Umfangsrichtung variieren - insbesondere wird die Wellenlänge (Abstand zwischen zwei in Umfangsrichtung benachbarten Wellenbergen oder zwischen zwei in Umfangsrichtung beabstandeten Wellentälern) größer. Ein Indikator für das Vorliegen einer Periodizität und damit einer Wellengeometrie im Sinne der Erfindung ist es, wenn mindestens drei Nulldurchgänge durch eine gedachte, vorzugsweise auf einem Radius liegende und sich in Umfangsrichtung erstreckende Nulllinie gegeben sind, wobei die Wellengeometrie bevorzugt mindestens zwei gleichphasige, d.h. zwei ansteigende oder zwei abfallende Flanken bzw. Nulldurchgänge aufweist.

Ganz besonders bevorzugt ist es, wenn zusätzlich zu dem vorerwähnten äußeren Längsspalt im Bereich des Innenumfangs des herzustellenden Rohrkörpers durch das Aneinanderanlegen der abgeschrägten Randseiten auch ein innerer, vorzugsweise in Umfangsrichtung zu dem äußeren Längsspalt versetzter Längsspalt gebildet wird, welcher noch weiter bevorzugt bei dem auf den Positionierschritt folgenden Schweißschritt ebenfalls mit Kunststoffmaterial gefüllt wird, so dass auch im Innenbereich ein abgeschrägter bzw. nicht gestufter Übergangsabschnitt zwischen höhenversetzten in Umfangsrichtung beabstandeten beim Schweißprozess nicht aufgeschmolzenen Innenumfangsflächeabschnitten gebildet wird. Bei dieser Ausführungsform ist also nicht nur nach dem Verschweißvorgang ein Übergangsabschnitt zwischen höhenversetzten Außenumfangsflächenabschnitten realisiert, sondern analog auch ein innerer Übergangsabschnitt.

Als besonders vorteilhaft hat es sich herausgestellt, wenn die erste Randseite und die zweite Randseite derart relativ zueinander angeordnet werden, dass die erste Randseite die Außenumfangsfläche, genauer die benachbart zur zweiten Randseite liegende bzw. an diese angrenzende Außenumfangsfläche um eine bestimmte Strecke aus einem Wertebereich zwischen 0,01 mm und 1,50mm, vorzugsweise zwischen 0,05mm und 1,00mm, überragt. Bevorzugt überragt die zweite Randseite die an die erste Randseite angrenzende Innenumfangsfläche ebenfalls um eine Strecke aus den vorerwähnten Wertebereichen, ganz besonders bevorzugt um die gleiche Strecke, wie die erste Randseite die an die zweite Randseite angrenzende Außenumfangsfläche in Umfangsrichtung überragt.

Besonders bevorzugt ist es, wenn die erste und die zweite Randseite derart relativ zueinander höhenversetzt (radial versetzt) angeordnet werden, dass die Barriereschicht sich selbst in Umfangsrichtung, zumindest mit einem Teilstück überragt, d.h. überlappt, da hierdurch die Durchlässigkeit der Verpackungstube für Feuchtigkeit und/oder Sauerstoff noch weiter verbessert werden kann. Ganz besonders bevorzugt werden die Randseiten derart relativ zueinander angeordnet, dass eine radial äußere Grenze (Längskante, Längsgrenze) einer ersten sich in Längsrichtung des Foliensubstrates erstreckenden (einen Teil der ersten Randseite bildenden) Barriereschichtrandseite um eine Strecke aus einem Wertebereich zwischen 10µm und 300µm, vorzugsweise zwischen 20µm und 250µm, von einer radial inneren Grenze einer zweiten (einen Abschnitt der zweiten Randseite bildenden) Barriereschichtrandseite in Radialrichtung beabstandet ist.

Dabei gibt es für die relative Anordnung der beiden Barriereschichtrandseiten (in Abhängigkeit der Dickenverhältnisse) unterschiedliche Möglichkeiten. So können die beiden Barriereschichtrandseiten in radialer Richtung beabstandet sein, in radialer Richtung unmittelbar aneinander angrenzen oder sich in radialer Richtung ein Stück weit überlappen.

Als besonders zweckmäßig hat es sich im Hinblick auf eine verbesserte Dichtheit erwiesen, wenn die erste und die zweite Randseite in Umfangsrichtung gegeneinander gepresst werden, dass die Barriereschicht, zumindest im Verbindungsbereich des Foliensubstrates, vorzugsweise unter Ausbildung einer Wellengeometrie, gestaucht wird. Der hierzu notwendige Druck ist im Wesentlichen abhängig von der Beschaffenheit des Foliensubstrates, d.h. seiner Dicke bzw. Stärke (Schichtdicke) und/oder Schichtzusammensetzung.

Wie eingangs erwähnt, kann die Ausbildung des äußeren und/oder inneren Längsspaltes dadurch realisiert werden, dass die beiden Randseiten außen nicht bündig aneinander angrenzen, sondern in radialer Richtung höhenversetzt angeordnet sind. Gemeint ist also, dass die Dickenmitten der abgeschrägten, aneinander anliegenden Randseiten in radialer Richtung beabstandet sind, vorzugsweise um eine Strecke aus einem Bereich zwischen 10µm und 300µm, vorzugsweise um 20µm und 250µm. Dies führt dann zu einer Höhenversetzung des ersten, an die erste Randseite angrenzenden Außenumfangsflächenrandabschnittes zu dem zweiten, an die zweite Randseite angrenzenden Außenumfangsflächenrandabschnittes.

Wie eingangs erwähnt, sind beide Randseiten abgeschrägt, d.h. verlaufen unter einem von 90° unterschiedlichen Winkel zur Dickenerstreckungsrichtung des Foliensubstrates. Denkbar ist es den ersten Winkel, unter dem die erste Randseite zu Dickenerstreckungsrichtung verläuft unterschiedlich zu wählen von dem zweiten Winkel, den die zweite Randseite zur Dickenerstreckungsrichtung mit der Dickenerstreckungsrichtung einschließt. Alternativ ist es möglich, dass der erste und der zweite Winkel, zumindest näherungsweise gleich sind. Bevorzugt ist sowohl der erste Winkel als auch der zweite Winkel aus einem Winkelbereich zwischen 1° und 80° gewählt vorzugsweise zwischen 5° und 70°, noch weiter bevorzugt zwischen 10° und 60°. Bei der Dickenerstreckungsrichtung handelt es sich um eine Dickenerstreckungsrichtung an einer Umfangsposition, an der die Dickenerstreckungsrichtung an eine der Randseiten angrenzt, oder zumindest einer der Randseiten schneidet. Es kann alternativ auch davon ausgegangen werden, dass es sich um die Dickenerstreckungsrichtung des Foliensubstrates in einem flachen (ebenen) abgewickelten Zustand handelt.

Bevorzugt sind die Randseiten als geradliniger, winklig zum Außenumfang verlaufender Schnitt ausgeführt, d.h. erstrecken sich eben bzw. geradlinig vom Außen- bis zum Innenumfang.

Wie ebenfalls eingangs erwähnt, ermöglicht das erfindungsgemäße Verfahren sowohl die Verwendung von symmetrisch zu einer gedachten Mittelebene ausgebildeten Foliensubstraten als auch von asymmetrischen Substraten, wobei das Foliensubstrat bevorzugt entweder aus siegelfähigem, vorzugsweise thermoplastischem Kunststoff, beispielsweise Polyethylen, Polypropylen, oder aus deren Copolymeren besteht. Alternativ ist mindestens eine, insbesondere aus dem vorerwähnten Material ausgebildete (verschweißbare) Kunststoffschicht vorgesehen, die noch weiter bevorzugt eine äußerste Schicht des Foliensubstrates bildet. Bevorzugt ist die verschweißbare Kunststoffolie gepaart mit einer Barriereschicht, beispielsweise eine Schicht aus EVOH.

Die Erfindung führt auch auf eine Verpackungstube, die neben dem Rohrkörper einen in an sich bekannter Weise an dem Rohrkörper festgelegten Tubenkopf (mit Auslass) umfasst. Ganz besonders bevorzugt ist der Rohrkörper der Verpackungstube mit einem zuvor im Detail erläuterten, nach dem Konzept der Erfindung ausgebildeten Verfahren hergestellt, wobei jedenfalls der Rohrkörper (Tubenkörper) durch ein mit sich selbst Verschweißen des Foliensubstrates hergestellt ist. Erfindungsgemäß ist vorgesehen, dass die Barriereschicht, insbesondere durch Stauchung beim Verschweißen und/oder während der Aushärtung bzw. Verfestigung der Schweißnaht eine Wellengeometrie aufweist, also bevorzugt mindestens eine Auslenkung nach radial innen (Wellental) und eine daran in Umfangsrichtung angrenzende Auslenkung nach radial außen (Wellenberg).

Besonders bevorzugt wechseln sich mehrere Wellenberge und Wellentäler ab, wobei deren Amplitude vorzugsweise mit zunehmendem Abstand von der Schweißnaht abnimmt. Als besonders vorteilhaft hat es sich herausgestellt, wenn die Wellenlänge der Wellengeometrie in zumindest einem, vorzugsweise in einem an dem Verschweißungsbereich angrenzenden, Abschnitt aus einem Wertebereich zwischen 200 µm und 1800 µm vorzugsweise zwischen 400 µm und 1000 µm, ganz besonders bevorzugt zwischen 500 µm und 700 µm gewählt ist, ganz besonders bevorzugt beträgt die Wellenlänge etwa 670 µm. Unter der Wellenlänge wird dabei der Abstand zwischen den Minima zweier in Umfangsrichtung aufeinander folgender Wellentäler oder der in Umfangsrichtung gemessene Abstand zwischen dem Maxima zweier in Umfangsrichtung benachbarter Wellenberge verstanden, wobei zwischen zwei Wellentälern ein Wellenberg bzw. zwischen zwei Wellenbergen ein Wellental ausgebildet ist.

Besonders zweckmäßig ist es, wenn die Auslenkung (Amplitude) mindestens eines Wellentals oder eines Wellenberges bezogen auf eine (gedachte) Nulllinie (Nullliniendurchmesser) um die die Barriereschicht gewellt ist aus einem Wertebereich zwischen 15 µm und 45 µm, vorzugsweise zwischen 20 µm und 30 µm gewählt ist. Besonders zweckmäßig ist es, wenn das Doppelte dieser Auslenkung, d.h. der Abstand zwischen einem Maximum eines Wellenberges und dem Minimum eines in Umfangsrichtung unmittelbar angrenzenden Wellental aus einem Wertebereich zwischen 30 µm und 90 µm, vorzugsweise zwischen 40 µm und 70 µm gewählt ist.

In Weiterbildung der Erfindung ist mit Vorteil vorgesehen, dass ein erster (beim Schweißen bevorzugt nicht aufgeschmolzener, d.h. seine ursprüngliche Form aufweisender) Außenumfangsflächenabschnitt des Rohrkörpers in radialer Richtung beabstandet ist von einem zweiten (bevorzugt ebenfalls beim Schweißen nicht aufgeschmolzenen, d.h. seine ursprüngliche Form aufweisenden) Außenumfangsflächenabschnitt, wobei zwischen den beiden vorerwähnten, in radialer Richtung betrachtet höhenversetzten Außenumfangsflächenabschnitten ein äußerer Übergangsabschnitt aus geschmolzenem Kunststoffschichtmaterial ausgebildet ist, mit dem ein (schräger) stufenloser Übergang in Umfangsrichtung zwischen den Außenumfangsflächenabschnitten gebildet ist.

Bevorzugt entsteht dieser Übergangsabschnitt durch Aufschmelzen eines Überstandszipfels einer ersten Randseite des Foliensubstrates, welcher vor dem Verschweißen einen an die zweite Randseite angrenzenden Außenumfangsflächenrandabschnitt unter Ausbildung eines äußeren Längsspaltes überragt hat.

Bevorzugt ist in analoger Weise am Innenumfang der Verpackungstube ein eben solcher, dann innerer Übergangsabschnitt zwischen zwei in radialer Richtung beabstandeten Innenumfangsflächenabschnitten vorgesehen.

Besonders bevorzugt überragt der vorerwähnte äußere Übergangsabschnitt einen zwischen Randseiten des Foliensubstrates ausgebildeten Verbindungsbereich bzw. eine Grenzfläche zwischen diesen beiden Randsätzen in Umfangsrichtung, so dass sich dieser Grenzbereich nicht geradlinig nach außen fortsetzt. Bevorzugt ist eine Überdeckung des vorerwähnten Grenzbereichs zusätzlich am Innenumfang mittels des inneren Übergangsabschnittes realisiert.

Ganz besonders bevorzugt ist der äußere Übergangsabschnitt ausschließlich aus geschmolzenem Kunststoffschichtmaterial des Folienmaterials, insbesondere einer äußersten Kunststoffschicht ausgebildet. Analog besteht bevorzugt, falls vorgesehen, ein innerer Übergangsabschnitt ausschließlich aus geschmolzenem Kunststoffschichtmaterial des Foliensubstrates, insbesondere aus einer innersten Kunststoffschicht.

Wie im Rahmen des Verfahrens offenbart, ist es besonders zweckmäßig, wenn das Foliensubstrat mindestens eine Barriereschicht gegen Feuchtigkeit und/oder Sauerstoff umfasst, wobei die Barriereschicht eine erste zur ersten Randseite gehörende Barriereschichtrandseite aufweist und eine zweite zur zweiten Randseite gehörende Barriereschichtrandseite, wobei diese analog zu den Randseiten in einander entgegengesetzte Umfangsrichtungen orientiert sind bzw. weisen.

Besonders zweckmäßig ist es, wenn sich die Barriereschicht (d.h. ihre in einander entgegengesetzte Umfangsrichtungen weisenden Enden) ein Stück weit in Umfangsrichtung überlappt (überlappen), bevorzugt um eine Strecke aus einem Wertebereich, welche im Zusammenhang mit einer bevorzugten Ausführungsform des Verfahrens offenbart wurde. Ganz besonders bevorzugt ist es, wenn die Barriereschicht, insbesondere durch Gegeneinanderpressen der Randseiten des Foliensubstrates bei der Herstellung und anschließender Fixierung mittels des Schweißprozesses auch noch in der Verpackungstube gestaucht ist, vorzugsweise gewellt ist.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine schematische Querschnittsansicht eines Rohrkörpers einer Verpackungstube mit einem übertrieben abgeflacht dargestellten Umfangsabschnitt, in welchem zwei Längsrandseiten des den Rohrkörper bildenden Foliensubstrates verbunden sind,
- Fig. 2a:: einen Ausschnitt aus einem späteren Verbindungsbereich eines zu einem Rohrkörper umgeformten Foliensubstrates, wobei das Foliensubstrat mit zwei abgeschrägten, höhenversetzten Randseiten aneinander anliegt, wobei in dem gezeigten Ausführungsbeispiel ein dreischichtiges, symmetrisches Folienmaterial zur Anwendung kommt, bei welchem zwei Barriereschichtrandseiten in radialer Richtung beabstandet sind,
- Fig. 2b:: einen Ausschnitt eines aus der Situation gemäß Fig. 2a durch Verschweißen hergestellten Verbindung des Foliensubstrates zu einem Rohrkörper,
- Fig. 3a:: eine Situation während der Ausbildung eines Rohrkörpers aus einem Foliensubstrat, bei welcher zwei Randseiten des Foliensubstrates derart höhenversetzt zueinander angeordnet sind, dass die zwei Barriereschichtrandseiten sich nicht überlappen, sondern gerade aneinander in radialer Richtung einander angrenzen,
- Fig. 3b:: einen Ausschnitt eines aus der Situation gemäß Fig. 3a hergestellten Rohrkörpers einer Verpackungstube,
- Fig. 4:: eine Situation während des Herstellungsprozesses eines Rohrkörpers für eine Verpackungstube, wobei die beiden Randseiten des Foliensubstrates so höhenversetzt sind und aneinander anliegen, dass eine Barriereschicht sich in radialer Richtung überlappt, und
- Fig. 5:: einen Ausschnitt aus einem Rohrkörper für eine Verpackungstube, bei welchem bei der Herstellung die Barriereschicht gestaucht wurde, wodurch sich eine gestauchte bzw. gewellte Ausformung der Barriereschicht ergeben hat, wobei in dem gezeigten Ausführungsbeispiel sich die Barriereschichtrandseiten in radialer Richtung nicht überlappen sondern aneinander angrenzen - bei alternativen, nicht gezeigten Ausführungsvarianten überlappen sich diese auch noch im gestauchten Zustand oder sind alternativ in radialer Richtung voneinander beabstandet.

In den Figuren sind gleiche Elemente und Elemente mit der gleichen Funktion mit den gleichen Bezugszeichen gekennzeichnet.

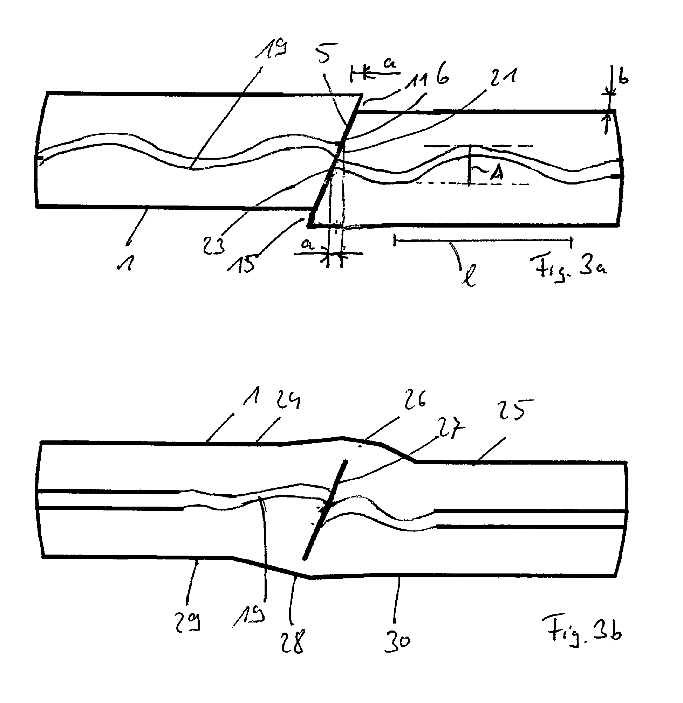

In den Figuren ist die Wellengeometrie der Barriereschicht stark schematisiert dargestellt. Die Definition, was unter einer Wellenlänge im Sinne der Erfindung oder dem Radialabstand zwischen dem Maximum eines Wellenberges oder dem Minimum eines in Umfangsrichtung unmittelbar angrenzenden Wellentals zu verstehen ist, ergibt sich aus der schematischen Darstellung gemäß Fig. 3a.

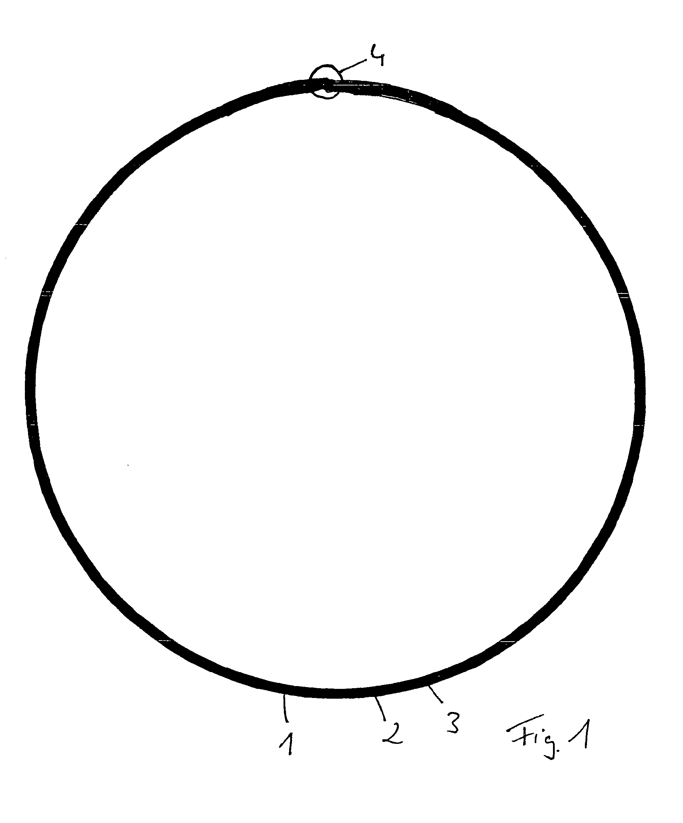

In Fig. 1 ist in einer Querschnittsansicht ein im Wesentlichen kreisrund konturierter Rohrkörper 1 für eine ansonsten nicht weiter dargestellte, an sich bekannte Verpackungstube im Wesentlichen bestehend aus Kunststoff gezeigt. Der Rohrkörper 1 ist gebildet von einem ein- oder mehrschichtigen Foliensubstrat 2, umfassend oder bestehend aus mindestens einer verschweißbaren Kunststoffschicht 3.

Zur Herstellung des Rohrkörpers 1 wird das bandförmige Foliensubstrat 2 zu einer Zylinderform geformt, wobei in Fig. 1 nicht im Detail zu erkennende, abgeschrägte Randseiten aneinander angelegt werden und dann das Foliensubstrat zur Fixierung des Rohrkörpers 1 in dem eingekreisten Bereich 4 miteinander verschweißt wird, wobei mögliche detaillierte Ansichten bzw. Ausführungsvarianten des Bereichs 4 (vor und nach dem Verschweißen) in den folgenden Figuren noch näher erläutert werden. Das Verschweißen erfolgt beispielsweise derart, dass der Bereich 4 sandwichartig zwischen zwei Schweißbändern aufgenommen wird, die dann, insbesondere mittels einer HF-Schweißeinrichtung erwärmt werden, was zur zumindest teilweisen Aufschmelzung des Foliensubstrates 2 im Bereich 4 führt. Auf die Verschweißstation folgt bevorzugt in an sich bekannter Weise eine Kühlstrecke zur Ausbildung (d.h. Aushärtung) der Schweißnaht.

In Fig. 2a ist eine mögliche Situation vor dem Verschweißschritt gezeigt. Das Foliensubstrat 2, welches in dem gezeigten Ausführungsbeispiel dreischichtig ausgeführt ist, wurde beispielsweise mit Hilfe eines Formbandes und/oder konkaver Rollen zu einem Rohrkörper verformt, derart, dass eine schräg verlaufende, in eine erste Umfangsrichtung orientierte erste Randseite 5 abschnittsweise, d.h. lediglich partiell bzw. nicht vollflächig an einer gegenüberliegenden zweiten, ebenfalls schräg verlaufenden Randseite 6 anliegt. Wie sich aus Fig. 2a ergibt, ist die Barriereschicht 19 in Umfangsrichtung unter Ausbildung einer Wellengeometrie gestaucht.

Wie aus Fig. 2a deutlich hervorgeht sind die beiden Randseiten 5, 6 radial höhenversetzt zueinander angeordnet, so dass die jeweiligen, nicht eingezeichneten Dickenmitten in radialer Richtung höhenversetzt sind. Dies führt dazu, dass die erste Randseite mit einem radial äußeren Bereich 7 eine Außenumfangsfläche 8 des Rohrkörpers in Umfangsrichtung, hier in der Zeichnungsebene nach rechts überragt, und zwar um eine in Umfangsrichtung gemessene Strecke a von in dem gezeigten Ausführungsbeispiel zwischen 0,05mm und 0,3mm. Dies ist, wie eingangs in anderen Worten ausgedrückt der Fall, da ein erster, an die erste Randseite 5 winklig angrenzender Außenumfangsflächenrandabschnitt 9 in radialer Richtung in Bezug auf eine nicht dargestellte Längsmittelachse des Rohrkörpers radial weiter außen angeordnet ist als ein zweiter Außenumfangsflächenrandabschnitt 10, der winklig an die zweite Randseite 6 angrenzt. Anders ausgedrückt sind der erste und der zweite Außenumfangsflächenrandabschnitt 9, 10 um das Maß b von 80µm in radialer Richtung höhenversetzt. Dadurch, dass die erste Randseite 5 abgeschrägt ausgebildet ist wird aufgrund der dargestellten relativen Anordnung der beiden Randseiten 5, 6 zwischen der ersten Randseite 5, genauer zwischen dem radial äußeren (überragenden) Bereich 7 (Zipfel) und der Außenumfangsfläche 8, genauer dem zweiten Außenumfangsflächenrandabschnitt 10 ein äußerer Längsspalt 11 mit einer zumindest näherungsweise dreieckigen Querschnittskontur gebildet.

In dem gezeigten Ausführungsbeispiel schließt die erste Randseite 5 mit einer Dickenerstreckungsrichtung D des Foliensubstrates 2 einen Winkel a von 30° ein. Die zweite Randseite 6 schließt mit der Dickenerstreckungsrichtung D einen Winkel ß ein, der in dem gezeigten Ausführungsbeispiel dem Winkel a entspricht.

Wie in Fig. 2a weiter zu entnehmen ist, überragt die zweite Randseite 6 die Innenumfangsfläche 12 in einer Umfangsrichtung, die der Umfangsrichtung entgegengesetzt ist, in der die erste Randseite 5 die Außenumfangsfläche 8 überragt, mit dem Resultat, dass zwischen der zweiten Randseite 6, genauer einem radial inneren Bereich 13 und der Innenumfangsfläche 12, genauer einem ersten, an die erste Randseite 5 winklig angrenzenden ersten Innenumfangsflächenrandabschnitt 14 ein innerer Längsspalt 15 ausgebildet ist. Der erste Innenumfangsflächenrandabschnitt 14 ist in radialer Richtung weiter außen angeordnet, und zwar um das Maß b, wie ein zweiter Innenumfangsflächenrandabschnitt 16, welcher an die zweite Randseite 6 angrenzt und winklig zu dieser angeordnet ist.

Die beiden Längsspalte 11, 15, werden bei einem folgenden Schweißprozess verschlossen bzw. zumindest teilweise aufgefüllt von Kunststoffmaterial des Foliensubstrates 2 unter Ausbildung von noch zu erläuternden Übergangsabschnitten.

Wie erwähnt, kann das Foliensubstrat 2 vollständig aus einer einzigen, dann verschweißbaren Kunststoffschicht bestehen. In dem gezeigten Ausführungsbeispiel ist das symmetrisch ausgestaltete Foliensubstrat 2 dreischichtig ausgebildet und umfasst neben einer äußeren, hier äußersten, verschweißbaren Kunststoffschicht 17 eine innere, hier innerste, verschweißbare Kunststoffschicht 18, wobei die beiden Kunststoffschichten 17, 18 in dem gezeigten Ausführungsbeispiel die gleiche Dicke aufweisen (was nicht zwingend der Fall ist) und eine Barriereschicht 19, beispielsweise eine Aluminiumschicht sandwichartig zwischen sich aufnehmen. Wie sich ferner aus dem gezeigten Ausführungsbeispiel ergibt, überlappt sich die Barriereschicht 19 in Umfangsrichtung, um das Maß a, welches gemessen ist zwischen einer radial äußeren Grenze 20 einer ersten Barriereschichtrandseite 21 und einer radial inneren Grenze 22 einer zweiten Barriereschichtrandseite 23. Die erste Barriereschichtrandseite 21 ist in dem gezeigten Ausführungsbeispiel in radialer Richtung beabstandet von der zweiten Barriereschichtrandseite 23, wobei dies, wie später noch erläutert werden wird, nicht zwingend der Fall sein muss - möglich ist auch ein aneinander Angrenzen oder ein Überlappen in radialer Richtung.

In Fig. 2b ist ein Ausschnitt eines fertigen, d.h. verschweißten Rohrkörpers 1 gezeigt. Zu erkennen ist in der Schnittdarstellung ein Höhenversatz (Radialversatz) zwischen einem ersten (beim Verschweißen nicht verformten) Außenumfangsflächenabschnitt 24 und einem in Umfangsrichtung beabstandeten zweiten Außenumfangsflächenabschnitt 25. Die beiden, auf unterschiedlichen Radien liegenden Außenumfangsflächenabschnitte 24, 25 sind über einen äußeren Übergangsabschnitt 26 verbunden, der beim Verschweißen der in Fig. 2a gezeigten Situation entsteht. Dieser äußere Übergangsbereich 26 verbindet stufenlos, d.h. fließend die beiden radial versetzten Außenumfangsflächenabschnitte 24, 25 und überdeckt bzw. überlappt einen Grenzbereich 27 bzw. Anlagebereich zwischen den (ursprünglichen) Randseiten, so dass sich dieser Verbindungs- bzw. Grenzbereich nicht linear bis an die Außenumfangsfläche 8 fortsetzt.

Analog ist der Rohrkörper 1 am Innenumfang ausgebildet. Dort ist ein innerer Übergangsabschnitt 28 zur stufenlosen Verbindung von in radialer Richtung versetzten Innenumfangsflächenabschnitten 29, 30 ausgebildet.

In dem gezeigten Ausführungsbeispiel ist der äußere Übergangsabschnitt 26 gebildet von wieder erkaltetem Kunststoffmaterial aus dem ersten Umfangsflächenrandabschnitt 9, ggf. teilweise zusätzlich aus Kunststoffmaterial des zweiten Umfangsflächenrandabschnittes 10. Analog ist der innere Übergangsabschnitt 28 gebildet von Kunststoffmaterial des ursprünglichen zweiten Innenumfangsrandabschnittes 16 und ggf. von Kunststoffmaterial des ersten Innenumfangsflächenrandabschnittes 14.

Im Folgenden werden weitere alternative Ausführungsbeispiele erläutert, wobei zur Vermeidung von Wiederholungen im Wesentlichen nur auf Unterschiede zu den Ausführungsbeispielen gemäß den Fig. 2a und 2b eingegangen wird.

Der Unterschied zwischen dem Ausführungsbeispiel gemäß Fig. 2a und gemäß Fig. 3a besteht ausschließlich darin, dass die erste Randseite 5 und die zweite Randseite 6 weniger stark höhenversetzt, d.h. radial versetzt sind - das Maß b ist also geringer als bei dem Ausführungsbeispiel gemäß Fig. 2a und beträgt in dem gezeigten Ausführungsbeispiel etwa 65µm. Aus dem geringeren Höhenversatz resultiert auch eine geringere Überlappungsstrecke a, die in dem gezeigten Ausführungsbeispiel lediglich 37,5µm beträgt. Wie sich aus Fig. 3a entnehmen lässt, ist dennoch ein äußerer Längsspalt 11 sowie ein innerer Längsspalt 15 gebildet, welchem im weiteren Verlauf mit geschmolzenem Kunststoffmaterial zur Ausbildung eines entsprechenden Übergangsabschnittes gefüllt werden. Zu erkennen ist, dass die erste Barriereschichtrandseite 21 mit ihrer Unterkante bzw. unteren Grenze an die obere Grenze bzw. obere Kante der zweiten Barriereschichtrandseite 23 angrenzt. Es existiert also kein Radialabstand, auch überlappen sich die Barriereschichtrandseiten 21, 23 nicht in radialer Richtung.

Wie sich aus Fig. 3a ergibt, beträgt die Wellenlänge I, gemessen von einem Minimum eines zum Verschweißungsbereichs benachbarten Wellental bis zum Minimum des in Umfangsrichtung nächsten Wellentals I = 670 µm. Der Abstand (Radialabstand A) zwischen dem Minimum des bezogen auf den Verschweißungsbereichs ersten Wellentals zum Maximum des angrenzenden Wellenberges beträgt in dem gezeigten Ausführungsbeispiel A = 66 µm. Unter der Annahme, dass die maximale Auslenkung des ersten Wellentales der maximalen Auslenkung (Amplitude) des benachbarten Wellenberges entspricht, beträgt diese sowohl für das Wellental als auch für den Wellenberg 33 µm. Anders ausgedrückt beträgt der Radialabstand zwischen dem Maximum des Wellenberges bis zu einer Nulldurchmesserlinie 33 µm, ebenso wie der Abstand des Minimums des Wellentals zu dieser Nulldurchmesserlinie.

In Fig. 3b ist die Situation gemäß Fig. 3a in einem verschweißten Zustand gezeigt. Zu erkennen ist der äußere Übergangsabschnitt 26 zwischen dem ersten Außenumfangsflächenabschnitt 24 und dem radial weiter innen angeordneten zweiten Außenumfangsflächenabschnitt 25. In analoger Weise ist ein innerer Übergangsabschnitt 28 zwischen dem radial weiter außen angeordneten ersten Innenumfangsflächenabschnitt 29 und dem radial weiter innen angeordneten zweiten Innenumfangsflächenabschnitt 30 ausgebildet, wodurch sich der Grenzbereich 27 zwischen den Randseiten weder bis zum Außenumfang noch bis zum Innenumfang erstreckt, sondern außen in radialer Richtung von dem äußeren Übergangsabschnitt 26 und innen von dem inneren Übergangsabschnitt 28 in Umfangsrichtung überdeckt wird.

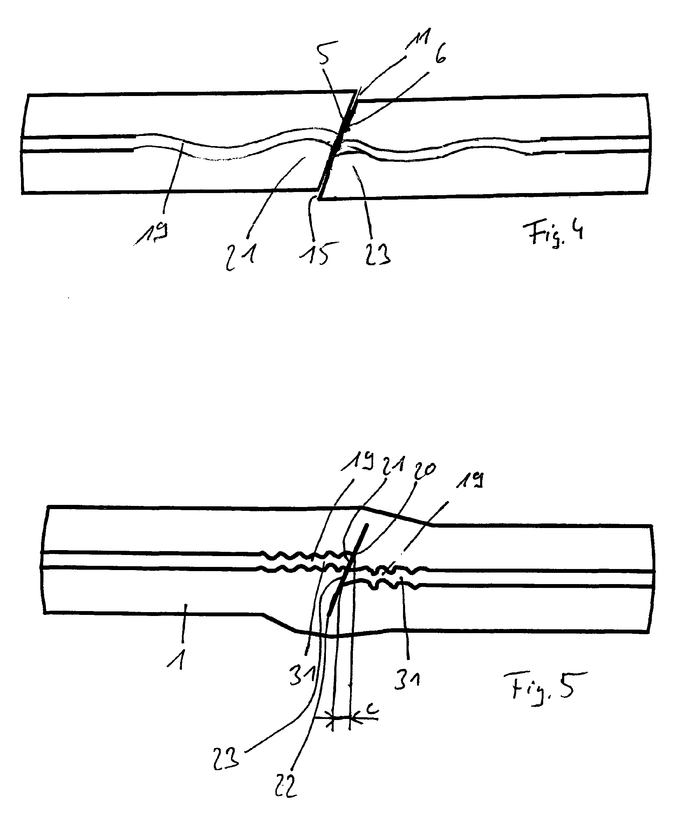

Bei dem Ausführungsbeispiel gemäß Fig. 4 ist ein noch geringerer Höhen- bzw. Radialversatz zwischen den Randseiten 5, 6 im noch nicht verschweißten Zustand realisiert. Die Randseiten sind derart angeordnet, dass sich die erste Barriereschichtrandseite 21 und die zweite Barriereschichtrandseite 23 in radialer Richtung etwas überlappen. Zu erkennen sind sowohl der äußere Längsspalt 11 als auch der innere Längsspalt 15.

Fig. 5 zeigt einen verschweißten Rohrkörper 1, wobei in diesem Fall die Randseiten 5, 6 so stark gegeneinander gepresst wurden, dass die Barriereschicht 19 unter Ausbildung einer Wellengeometrie 31 gestaucht wurde. Zu erkennen ist auch, dass sich die Barriereschicht 19 in Umfangsrichtung überlappt, derart, dass eine radial äußere Grenze 20 der ersten Barriereschichtrandseite 21 in Umfangsrichtung über die Strecke c von der radial inneren Grenze 22 der zweiten Barriereschichtrandseite 23 in Umfangsrichtung beabstandet ist.

### Bezugszeichnliste

- 1: Rohrkörper
- 2: Foliensubstrat
- 3: verschweißbare Kunststoffschicht
- 4: (Detail-)Bereich
- 5: erste Randseite
- 6: zweite Randseite
- 7: radial äußerer Bereich
- 8: Außenumfangsfläche
- 9: erster Außenumfangsflächenrandabschnitt
- 10: zweiter Außenumfangsflächenrandabschnitt
- 11: äußerer Längsspalt
- 12: Innenumfangsfläche
- 13: radialer innerer Bereich
- 14: erster Innenumfangsflächenrandabschnitt
- 15: innerer Längsspalt
- 16: zweiter Innenumfangsflächenrandabschnitt
- 17: äußere Kunststoffschicht
- 18: innere Kunststoffschicht
- 19: Barriereschicht
- 20: radial äußere Grenze
- 21: erste Barriereschichtrandseite
- 22: radial innere Grenze
- 23: zweite Barriereschichtrandseite
- 24: erster Außenumfangsflächenabschnitt
- 25: zweiter Außenumfangsflächenabschnitt
- 26: äußerer Übergangsabschnitt
- 27: Grenzbereich (Grenze/Verbindungsbereich)
- 28: innerer Übergangsabschnitt
- 29: erster Innenumfangsflächenabschnitt
- 30: zweiter Innenumfangsflächenabschnitt
- 31: Wellengeometrie
- D: Dickenerstreckungsrichtung
- a: Umfangsversatzmaß bzw. Überlappungsmaß
- b: Höhenversatzmaß (Radialversatzmaß)
- c: Umfangsversatzmaß bzw. Überlappungsmaß
- I: Wellenlänge
- A: Radialabschnitt Maximum Wellenberg zu Minimum Wellental

## Patentansprüche

1. Verfahren zum Herstellen von eine Innenumfangsfläche sowie eine Außenumfangsfläche (8) aufweisenden Rohrkörpern (1) für Verpackungstuben aus einem bandförmigen, eine Barriereschicht (19), insbesondere gegen Feuchtigkeit und/oder Sauerstoff, umfassenden Foliensubstrat (2), welches mindestens eine verschweißbare Kunststoffschicht (3) aufweist und welches eine sich in Längsrichtung des Foliensubstrates (2) erstreckende, abgeschrägte erste Randseite (5) und eine um die Breite des Foliensubstrates (2) zu der ersten Randseite (5) beabstandete, abgeschrägte zweite Randseite (6) umfasst, wobei die erste Randseite (5) und die zweite Randseite (6) unter Ausbildung einer Rohrform einander gegenüberliegend angeordnet und unter Wärmeeinwirkung verschweißt werden,
**dadurch gekennzeichnet,**
**dass** die erste und die zweite Randseite (5, 6) derart beim Verschweißen gegeneinander gepresst werden, dass die Barriereschicht (19) unter Ausbildung einer mehrere Wellenberge und/oder mehrere Wellentäler umfassenden und mindestens drei Nulldurchgänge und/oder mindestens zwei gleichphasige Nulldurchgänge aufweisenden Wellengeometrie gestaucht wird.

2. Verfahren nach Anspruch 1,
**dadurch gekennzeichnet,**
**dass** die erste und die zweite Randseite (5, 6) mit einem Druck aus einem Wertebereich zwischen 0,1 × 10⁵ und 4 × 10⁵ N/m², vorzugsweise zwischen 0,2 x 10⁵ und 1 × 10⁵ N/m², insbesondere während der Aushärtung des Verschweißungsbereichs, gegeneinander gepresst werden.

3. Verfahren nach einem der vorhergehenden Ansprüche,
**dadurch gekennzeichnet,**
**dass** die erste und die zweite Randseite (5, 6) derart relativ zueinander angeordnet werden, dass vor dem Verschweißen die erste Randseite (5) die Außenumfangsfläche (8) in Umfangsrichtung überragt, so dass zwischen der ersten Randseite (5) und der Außenumfangsfläche (8) ein äußerer Längsspalt (11) gebildet wird.

4. Verfahren nach einem der vorhergehenden Ansprüche,
**dadurch gekennzeichnet,**
**dass** die erste und die zweite Randseite (5, 6) derart relativ zueinander angeordnet werden, dass die zweite Randseite (6) die Innenumfangsfläche des Foliensubstrates (2) in Umfangsrichtung überragt, so dass zwischen der zweiten Randseite (6) und der Innenumfangsfläche ein innerer Längsspalt (15) gebildet wird.

5. Verfahren nach einem der vorhergehenden Ansprüche,
**dadurch gekennzeichnet,**
**dass** die Randseiten (5, 6) derart angeordnet werden, dass die erste Randseite (5) die Außenumfangsfläche (8) und/oder die zweite Randseite (6) die Innenumfangsfläche (12 um eine in Umfangrichtung gemessene Strecke (a) aus einem Wertebereich zwischen 0,05mm und 1,5mm, vorzugsweise zwischen 0,10mm und 1,00mm überragt.

6. Verfahren nach einem der vorhergehenden Ansprüche,
**dadurch gekennzeichnet,**
**dass** die Randseiten (5, 6) derart angeordnet werden, dass sich die Barriereschicht (19) in Umfangsrichtung überlappt, bevorzugt derart, dass eine radial äußere Grenze (20) einer ersten sich in Längsrichtung des Foliensubstrates (2) erstreckenden Barriereschichtrandseite (21) zwischen 0,05mm und 1,50mm, vorzugsweise zwischen 0,10mm und 1,00mm, von einer radial inneren Grenze (22) einer zweiten Barriereschichtrandseite (23) in Umfangsrichtung beabstandet ist.

7. Verfahren nach Anspruch 6,
**dadurch gekennzeichnet,**
**dass** die Randseiten (5, 6) derart relativ zueinander angeordnet werden, dass die erste und die zweite Barriereschichtrandseite (21, 23) sich in radialer Richtung überlappen oder in radialer Richtung voneinander beabstandet sind oder in radialer Richtung unmittelbar aneinander angrenzen.

8. Verfahren nach einem der vorhergehenden Ansprüche,
**dadurch gekennzeichnet,**
**dass** die Randseiten (5, 6) derart relativ zueinander angeordnet werden, so dass ein erster Außenumfangsflächenrandabschnitt (9) und ein zweiter Außenumfangsflächenrandabschnitt (10) um 10µm bis 300µm, vorzugsweise um 20µm bis 250µm in radialer Richtung höhenversetzt zueinander sind.

9. Verfahren nach einem der vorhergehenden Ansprüche,
**dadurch gekennzeichnet,**
**dass** die erste Randseite (5) unter einem ersten Winkel zu einer Dickenerstreckungsrichtung (D) des Foliensubstrates (2) und die zweite Randseite (6) unter einem zweiten Winkel zur Dickenerstreckungsrichtung (D) des Foliensubstrates (2) angeordnet ist, und dass der erste Winkel und/oder der zweite, vorzugsweise dem ersten Winkel entsprechende Winkel aus einem Winkelbereich zwischen 1° und 80°, vorzugsweise zwischen 5° und 70°, noch weiter bevorzugt zwischen 10° und 60° gewählt sind/ist.

10. Verpackungstube, insbesondere hergestellt gemäß einem der Verfahren nach einem der vorhergehenden Ansprüche, mit einem einen Auslass umfassenden Tubenkopf, der an einem aus einem mindestens eine verschweissbare Kunststoffschicht (3) und eine Barriereschicht, insbesondere gegen Feuchtigkeit und/oder Sauerstoff, umfassenden durch Verschweißen hergestellten, eine Außenumfangsfläche (8) und eine Innenumfangsfläche (12) aufweisenden Rohrkörper (1) festgelegt ist,
**dadurch gekennzeichnet,**
**dass** die Barriereschicht, zumindest abschnittsweise eine mindestens drei Nulldurchgänge und/oder mindestens zwei gleichphasige Nulldurchgänge aufweisende Wellengeometrie mit mindestens zwei Wellenbergen und/oder mit mindestens zwei Wellentälern aufweist.

11. Verpackungstube nach Anspruch 10,
**dadurch gekennzeichnet,**
**dass** die Wellenlänge (I) der Wellengeometrie in zumindest einem Abschnitt, insbesondere in einem einen Verschweißungsbereich angrenzenden Abschnitt, aus einem Wertebereich zwischen 200µm und 1800µm, vorzugsweise zwischen 400µm und 1000µm, ganz besonderes bevorzugt zwischen 500µm und 700µm gewählt ist.

12. Verpackungstube nach einem der Ansprüche 10 oder 11,
**dadurch gekennzeichnet,**
**dass** der Radialabstand (A) zwischen einem Maximum eines Wellenbergs und einem Minimum eines in Umfangsrichtung unmittelbar angrenzenden benachbarten Wellentals aus einem Wertebereich zwischen 30µm und 90µm, vorzugsweise zwischen 40µm und 70µm gewählt ist.

13. Verpackungstube nach einem der Ansprüche 10 bis 12,
**dadurch gekennzeichnet,**
**dass** ein sich in Längsrichtung sowie in Umfangsrichtung des Tubenrohres erstreckender erster Außenumfangsflächenabschnitt (24) und ein zweiter sich in Längsrichtung sowie in Umfangsrichtung des Tubenrohres erstreckender Außenumfangsflächenabschnitt (25) in radialer Richtung höhenversetzt sind, und dass in Umfangsrichtung zwischen den höhenversetzten Außenumfangsflächenabschnitten (24, 25) äußerer Übergangsabschnitt (26) aus geschmolzenem und wieder erkaltetem Kunststoffschichtmaterial als stufenloser Übergang in Umfangsrichtung ausgebildet ist.

14. Verpackungstube nach einem der Ansprüche 10 bis 13,
**dadurch gekennzeichnet,**
**dass** ein sich in Längsrichtung sowie in Umfangsrichtung des Tubenrohres erstreckender erster Innenumfangsflächenabschnitt (29) und ein zweiter sich in Längsrichtung sowie in Umfangsrichtung des Tubenrohres erstreckender Innenumfangsflächenabschnitt (30) senkrecht zur Umfangserstreckung in radialer Richtung höhenversetzt sind und dass in Umfangsrichtung zwischen den höhenversetzten Innenumfangsflächenabschnitten (29, 30) innerer Übergangsabschnitt (28) aus geschmolzenem und wieder erkaltetem Kunststoffschichtmaterial als stufenlosen Übergang in Umfangsrichtung ausgebildet ist.

15. Verpackungstube nach einem der Ansprüche 10 bis 14,
**dadurch gekennzeichnet,**
**dass** ein zwischen den Randseiten (5, 6) ausgebildeter Grenzbereich (27) außen in Umfangsrichtung überdeckt ist von dem äußeren Übergangsabschnitt (26) oder von dem ersten Außenumfangsflächenabschnitt (24) und/oder dass ein zwischen den Randseiten (5, 6) ausgebildeter Grenzbereich (27) innen in Umfangsrichtung überdeckt ist von dem inneren Übergangsabschnitt (28) oder von dem zweiten Außenumfangsflächenabschnitt (25).

16. Verpackungstube nach einem der Ansprüche 10 bis 15,
**dadurch gekennzeichnet,**
**dass** der äußere und/oder innere Übergangsabschnitt (28) ausschließlich aus geschmolzenem Kunststoffschichtmaterial des Foliensubstrates (2), insbesondere einer äußersten bzw. innersten Kunststoffschicht (17, 18) besteht.

17. Verpackungstube nach einem der Ansprüche 10 bis 16,
**dadurch gekennzeichnet,**
**dass** das Foliensubstrat (2) mehrschichtig ist und eine Barriereschicht (19) gegen Feuchtigkeit und/oder Sauerstoff umfasst, und dass die Barriereschicht (19) zwei sich in Längsrichtung des Foliensubstrates (2) erstreckenden und in einander entgegengesetzte Umfangsrichtungen orientierte Barriereschichtrandseiten (21, 23) aufweist.

18. Verpackungstube nach Anspruch 17,
**dadurch gekennzeichnet,**
**dass** sich die Barriereschicht (19) in Umfangsrichtung überlappt, bevorzugt um eine in Umfangsrichtung gemessene Strecke aus einem Wertebereich zwischen 0,05mm und 1,50mm, vorzugsweise zwischen 0,10mm und 1,00mm.

## Claims

1. A method for manufacturing a tubular body (1) having an inner circumferential surface as well as an outer circumferential surface (8) for packaging tubes formed from a strip-shaped film substrate (2) which comprises a barrier layer (19), in particular against moisture and/or oxygen, which has at least one weldable plastic layer (3) and which comprises a chamfered first edge face (5) extending in the longitudinal direction of the film substrate (2) and a chamfered second edge face (6) spaced apart from the first edge face (5) by the width of the film substrate (2), wherein the first edge face (5) and the second edge face (6) are disposed opposite each other to form a tube shape and are welded together by the action of heat,
**characterized in that**
the first and the second edge face (5, 6) are pressed against each other during welding so as to swage the barrier layer (19) accompanied by the formation of a wave geometry comprising a plurality of wave crests and/or a plurality of wave troughs and at least three zero crossings and/or at least two zero crossings which are in phase with each other.

2. The method as claimed in claim 1,
**characterized in that**
the first and the second edge faces (5, 6) are pressed against each other under a pressure in the range 0.1 x 10⁵ N/m² to 4 × 10⁵ N/m², preferably in the range 0.2 × 10⁵ N/m² to 1 × 10⁵ N/m², in particular during hardening of the region of the weld.

3. The method as claimed in one of the preceding claims,
**characterized in that**
the first and the second edge faces (5, 6) are disposed relative to each other in a manner such that, prior to welding, the first edge face (5) projects over the outer circumferential surface (8) in the circumferential direction in a manner such that an outer longitudinal gap (11) is formed between the first edge face (5) and the outer circumferential surface (8).

4. The method as claimed in one of the preceding claims,
**characterized in that**
the first and the second edge faces (5, 6) are disposed relative to each other in a manner such that the second edge face (6) projects over the inner circumferential surface of the film substrate (2) in the circumferential direction in a manner such that an inner longitudinal gap (15) is formed between the second edge face (6) and the inner circumferential surface.

5. The method as claimed in one of the preceding claims,
**characterized in that**
the edge faces (5, 6) are disposed in a manner such that the first edge face (5) projects over the outer circumferential surface (8) and/or the second edge face (6) projects over the inner circumferential surface (12) by a distance (a) measured in the circumferential direction in the range 0.05 mm to 1.5 mm, preferably in the range 0.10 mm to 1.00 mm.

6. The method as claimed in one of the preceding claims,
**characterized in that**
the edge faces (5, 6) are disposed in a manner such that the barrier layer (19) overlaps itself in the circumferential direction, preferably in a manner such that a radially outer boundary (20) of a first barrier layer edge face (21) extending in the longitudinal direction of the film substrate (2) is spaced apart from a radially inner boundary (22) of a second barrier layer edge face (23) in the circumferential direction by a distance in the range 0.05 mm to 1.50 mm, preferably in the range 0.10 mm to 1.00 mm.

7. The method as claimed in claim 6,
**characterized in that**
the edge faces (5, 6) are disposed relative to each other in a manner such that the first and the second barrier layer edge face (21, 23) overlap each other in a radial direction or are spaced apart from each other in a radial direction, or directly border each other in a radial direction.

8. The method as claimed in one of the preceding claims,
**characterized in that**
the edge faces (5, 6) are disposed relative to each other in a manner such that the height of a first outer circumferential surface edge section (9) is displaced with respect to the height of a second outer circumferential surface edge section (10) in a radial direction by a distance in the range 10 µm to 300 µm, preferably in the range 20 µm to 250 µm.

9. The method as claimed in one of the preceding claims,
**characterized in that**
the first edge face (5) is disposed at a first angle to a direction (D) in which the thickness of the film substrate (2) extends, and the second edge face (6) is disposed at a second angle to the direction (D) in which the thickness of the film substrate (2) extends and **in that** the first angle and/or the second angle, which preferably corresponds to the first angle, is/are selected from an angular range of 1° to 80°, preferably 5° to 70°, still more preferably 10° to 60°.

10. A packaging tube, in particular manufactured in accordance with one of the methods as claimed in one of the preceding claims, having a tube head comprising an outlet, which is secured to a tubular body (1) which comprises at least one weldable plastic layer (3) and a barrier layer, in particular against moisture and/or oxygen, which is manufactured by welding, and which has an outer circumferential surface (8) and inner circumferential surface (12), **characterized in that**
at least sections of the barrier layer have a wave geometry with at least two wave crests and/or with at least two wave troughs having at least three zero crossings and/or at least two zero crossings which are in phase with each other.

11. The packaging tube as claimed in claim 10,
**characterized in that**
in at least one section, in particular in a section adjacent to the welding region, the wavelength (l) of the wave geometry is selected from the range 200 µm to 1800 µm, preferably 400 µm to 1000 µm, more particularly preferably 500 µm to 700 µm.

12. The packaging tube as claimed in claim 10 or claim 11,
**characterized in that**
the radial distance (A) between a maximum for a wave crest and a minimum for an immediately adjacent wave trough in the circumferential direction is selected from the range 30 µm to 90 µm, preferably 40 µm to 70 µm.

13. The packaging tube as claimed in one of claims 10 to 12,
**characterized in that**
a first outer circumferential surface section (24) extending in the longitudinal direction as well as in the circumferential direction of the tubular pipe and a second outer circumferential surface section (25) extending in the longitudinal direction as well as in the circumferential direction of the tubular pipe are height-offset in a radial direction, and **in that** an outer transitional section (26) comprised of fused and re-cooled plastic layer material is formed in the circumferential direction between the offset outer circumferential surface sections (24, 25) as a continuous transition in the circumferential direction.

14. The packaging tube as claimed in one of claims 10 to 13,
**characterized in that**
a first inner circumferential surface section (29) extending in the longitudinal direction as well as in the circumferential direction of the tubular pipe and a second inner circumferential surface section (30) extending in the longitudinal direction as well as in the circumferential direction of the tubular pipe are height-offset in a radial direction perpendicular to the circumferential extension, and **in that** an inner transitional section (28) comprised of fused and re-cooled plastic layer material is formed in the circumferential direction between the offset inner circumferential surface sections (29, 30) as a continuous transition in the circumferential direction.

15. The packaging tube as claimed in one of claims 10 to 14,
**characterized in that**
a boundary region (27) formed between the edge faces (5, 6) is covered on the outside in the circumferential direction by the outer transitional section (26) or by the first outer circumferential surface section (24) and/or **in that** a boundary region (27) formed between the edge faces (5, 6) is covered on the inside in the circumferential direction by the inner transitional section (28) or by the second outer circumferential surface section (25).

16. The packaging tube as claimed in one of claims 10 to 15,
**characterized in that**
the outer and/or inner transitional section (28) consists exclusively of fused plastic layer material of the film substrate (2), in particular an outermost or innermost plastic layer (17, 18).

17. The packaging tube as claimed in one of claims 10 to 16,
**characterized in that**
the film substrate (2) is multi-layered and comprises a barrier layer (19) against moisture and/or oxygen, and **in that** the barrier layer (19) has two barrier layer edge faces (21, 23) which extend in the longitudinal direction of the film substrate (2) and are orientated in mutually opposing circumferential directions.

18. The packaging tube as claimed in claim 17,
**characterized in that**
the barrier layer (19) overlaps itself in the circumferential direction, preferably by a distance measured in the circumferential direction in the range 0.05 mm to 1.50 mm, preferably in the range 0.10 mm to 1.00 mm.

## Revendications

1. Procédé de fabrication de corps tubulaires (1) présentant une surface périphérique intérieure ainsi qu'une surface périphérique extérieure (8) pour des tubes d'emballage constitués d'un substrat en film en forme de bande (2) comprenant une couche barrière (19), en particulier contre l'humidité et/ou l'oxygène, qui présente au moins une couche en plastique soudable (3) et qui comprend une première face de bord biseautée (5) s'étendant dans la direction longitudinale du substrat en film (2) et une deuxième face de bord biseautée (6) espacée de la première face de bord (5) de la largeur du substrat en film (2), la première face de bord (5) et la deuxième face de bord (6) étant disposées l'une en face de l'autre en formant une forme tubulaire et étant soudées par application de chaleur,
**caractérisé en ce que**
la première et la deuxième face de bord (5, 6) sont pressées l'une contre l'autre lors du soudage de telle sorte que la couche barrière (19) soit refoulée en formant une géométrie ondulée comprenant plusieurs sommets d'ondulation et/ou plusieurs creux d'ondulation et au moins trois passages par zéro et/ou au moins deux passages par zéro de même phase.

2. Procédé selon la revendication 1,
**caractérisé en ce que**
la première et la deuxième face de bord (5, 6) sont pressées l'une contre l'autre avec une pression dans une plage de valeurs comprise entre 0,1 x 10⁵ et 4 x 10⁵ N/m², de préférence entre 0,2 x 10⁵ et 1 x 10⁵ N/m², en particulier pendant le durcissement de la zone de soudage.

3. Procédé selon l'une quelconque des revendications précédentes,
**caractérisé en ce que**
la première et la deuxième face de bord (5, 6) sont disposées l'une par rapport à l'autre de telle sorte qu'avant le soudage, la première face de bord (5) dépasse de la surface périphérique extérieure (8) dans la direction périphérique, de telle sorte qu'entre la première face de bord (5) et la surface périphérique extérieure (8) soit formée une fente longitudinale extérieure (11).

4. Procédé selon l'une quelconque des revendications précédentes,
**caractérisé en ce que**
la première et la deuxième face de bord (5, 6) sont disposées l'une par rapport à l'autre de telle sorte que la deuxième face de bord (6) dépasse de la surface périphérique intérieure du substrat en film (2) dans la direction périphérique de telle sorte qu'entre la deuxième face de bord (6) et la surface périphérique intérieure soit formée une fente longitudinale intérieure (15).

5. Procédé selon l'une quelconque des revendications précédentes,
**caractérisé en ce que**
les faces de bord (5, 6) sont disposées de telle sorte que la première face de bord (5) dépasse de la surface périphérique extérieure (8) et/ou que la deuxième face de bord (6) dépasse de la surface périphérique intérieure (12) d'une distance (a) mesurée dans la direction périphérique dans une plage de valeurs comprise entre 0,05 mm et 1,5 mm, de préférence entre 0,10 mm et 1,00 mm.

6. Procédé selon l'une quelconque des revendications précédentes,
**caractérisé en ce que**
les faces de bord (5, 6) sont disposées de telle sorte que la couche barrière (19) se chevauche dans la direction périphérique, de préférence de telle sorte qu'une limite radialement extérieure (20) d'une première face de bord de couche barrière (21) s'étendant dans la direction longitudinale du substrat en film (2) soit espacée dans la direction périphérique d'une limite radialement interne (22) d'une deuxième face de bord de couche barrière (23) d'une distance comprise entre 0,05 mm et 1,50 mm, de préférence entre 0,10 mm et 1,00 mm.

7. Procédé selon la revendication 6,
**caractérisé en ce que**
les faces de bord (5, 6) sont disposées l'une par rapport à l'autre de telle sorte que la première et la deuxième face de bord de couche barrière (21, 23) se chevauchent dans la direction radiale ou soient espacées l'une de l'autre dans la direction radiale ou soient directement adjacentes l'une à l'autre dans la direction radiale.

8. Procédé selon l'une quelconque des revendications précédentes,
**caractérisé en ce que**
les faces de bord (5, 6) sont disposées l'une par rapport à l'autre de telle sorte qu'une première portion de bord de surface périphérique extérieure (9) et une deuxième portion de bord de surface périphérique extérieure (10) soient décalées en hauteur l'une par rapport à l'autre dans la direction radiale de 10 µm à 300 µm, de préférence de 20 µm à 250 µm.

9. Procédé selon l'une quelconque des revendications précédentes,
**caractérisé en ce que**
la première face de bord (5) est disposée suivant un premier angle par rapport à une direction d'étendue d'épaisseur (D) du substrat en film (2) et la deuxième face de bord (6) est disposée suivant un deuxième angle par rapport à la direction d'étendue d'épaisseur (D) du substrat en film (2) et **en ce que** le premier angle et/ou le deuxième angle, correspondant de préférence au premier angle, est/sont choisi(s) dans une plage angulaire comprise entre 1° et 80°, de préférence entre 5° et 70°, encore plus préférablement entre 10° et 60°.

10. Tube d'emballage, en particulier fabriqué selon l'un des procédés selon l'une quelconque des revendications précédentes, comprenant une tête de tube comprenant une sortie qui est fixée à un corps tubulaire (1) présentant une surface périphérique extérieure (8) et une surface périphérique intérieure (12) fabriqué par soudage et comprenant au moins une couche de plastique soudable (3) et une couche barrière, en particulier contre l'humidité et/ou l'oxygène,
**caractérisé en ce que**
la couche barrière présente, au moins en partie, une géométrie ondulée présentant au moins trois passages par zéro et/ou au moins deux passages par zéro de même phase avec au moins deux sommets d'ondulation et/ou avec au moins deux creux d'ondulation.

11. Tube d'emballage selon la revendication 10, **caractérisé en ce que** la longueur d'onde (l) de la géométrie ondulée dans au moins une portion, en particulier dans une portion adjacente à une région de soudage, est sélectionnée dans une plage de valeurs comprise entre 200 µm et 1800 µm, de préférence entre 400 µm et 1000 µm, tout particulièrement préférablement entre 500 µm et 700 µm.

12. Tube d'emballage selon l'une quelconque des revendications 10 ou 11,
**caractérisé en ce que**
la distance radiale (A) entre un maximum d'un sommet d'ondulation et un minimum d'un creux d'ondulation immédiatement adjacent dans la direction périphérique est sélectionnée dans une plage de valeurs comprise entre 30 µm et 90 µm, de préférence entre 40 µm et 70 µm.

13. Tube d'emballage selon l'une quelconque des revendications 10 à 12,
**caractérisé en ce**
**qu'**une première portion de surface périphérique extérieure (24) s'étendant dans la direction longitudinale ainsi que dans la direction périphérique du tube et une deuxième portion de surface périphérique extérieure (25) s'étendant dans la direction longitudinale ainsi que dans la direction périphérique du tube sont décalées en hauteur dans la direction radiale et en ce que dans la direction périphérique entre les portions de surface périphérique extérieure décalées en hauteur (24, 25) est réalisée une portion de transition extérieure (26) en matériau de couche en plastique fondu et à nouveau refroidi en tant que transition continue dans la direction périphérique.

14. Tube d'emballage selon l'une quelconque des revendications 10 à 13,
**caractérisé en ce**
**qu'**une première portion de surface périphérique intérieure (29) s'étendant dans la direction longitudinale ainsi que dans la direction périphérique du tube et une deuxième portion de surface périphérique intérieure (30) s'étendant dans la direction longitudinale ainsi que dans la direction périphérique du tube sont décalées en hauteur dans la direction radiale perpendiculairement à l'étendue périphérique et en ce que dans la direction périphérique entre les portions de surface périphérique intérieure décalées en hauteur (29, 30) est réalisée une portion de transition intérieure (28) en matériau de couche en plastique fondu et à nouveau refroidi en tant que transition continue dans la direction périphérique.

15. Tube d'emballage selon l'une quelconque des revendications 10 à 14,
**caractérisé en ce**
**qu'**une région limite (27) réalisée entre les faces de bord (5, 6) est recouverte à l'extérieur dans la direction périphérique par la portion de transition extérieure (26) ou par la première portion de surface périphérique extérieure (24) et/ou en ce qu'une région limite (27) réalisée entre les faces de bord (5, 6) est recouverte à l'intérieur dans la direction périphérique par la portion de transition intérieure (28) ou par la deuxième portion de surface périphérique extérieure (25).

16. Tube d'emballage selon l'une quelconque des revendications 10 à 15,
**caractérisé en ce que**
la portion de transition extérieure et/ou intérieure (28) se compose(nt) exclusivement de matériau de couche en plastique fondu du substrat en film (2), en particulier d'une couche de plastique la plus extérieure ou la plus intérieure (17, 18).

17. Tube d'emballage selon l'une quelconque des revendications 10 à 16,
**caractérisé en ce que**
le substrat en film (2) est multicouche et comprend une couche barrière (19) contre l'humidité et/ou l'oxygène, et **en ce que** la couche barrière (19) présente deux faces de bord de couche barrière (21, 23) s'étendant dans la direction longitudinale du substrat en film (2) et orientées dans des directions périphériques mutuellement opposées.

18. Tube d'emballage selon la revendication 17,
**caractérisé en ce que**
la couche barrière (19) se chevauche dans la direction périphérique, de préférence d'une distance mesurée dans la direction périphérique dans une plage de valeurs comprise entre 0,05 mm et 1,50 mm, de préférence entre 0,10 mm et 1,00 mm.
